# EUROPEAN PATENT APPLICATION

(11) **EP 1 612 725 A1**
(43) Date of publication of application: **04.01.2006**
(21) Application number: 03715604.9
(22) Date of filing: 28.03.2003
(51) Int. Cl.: G06T 1/00, G06T 7/00

(54) **IMAGE PROCESSING METHOD AND IMAGE PROCESSING DEVICE**

(71) Applicant: National Institute of Information and Communications Technology Independant Administrative Agency, Koganei-shi, Tokyo 184-0015 (JP)
(72) Inventor: Miyamori, H., Nat. Inst. of Inf. and Com. Tecn., Koganei-shi, Tokyo 184-0015 (JP)
(74) Representative: Finnie, Peter John
(86) International application number: PCT/JP2003/003986
(87) International publication number: WO 2004/088587

(57) **Abstract**

The present invention is an image processing technology for eliminating a second line-shaped image object, which overlaps with a first image object in one image comprising effective or ineffective pixels, from the first image object. The technology includes the respective steps of a line segment extraction step for extracting a line segment from the second line-shaped image object, an elimination step for eliminating the second line-shaped image object from the first image object, a pixel extraction step for scanning a vicinity region of the line segment on the first image object and sequentially extracting pixels to be scanned, an effective pixel determination step for determining whether or not the extracted pixels to be scanned are effective pixels, and a pixel interpolation step for dropping a perpendicular from the pixels to be scanned that are determined to be the effective pixels at the effective pixel determination step toward a nearest line segment and setting all the pixels on the perpendicular as the effective pixels.

## Description

### Technical Field

The present invention relates to an image processing method and apparatus, and more particularly, to a method and apparatus for eliminating a second line-shaped image object from a first image object overlapping with each other in a single image.

### Background Art

Recently, as information communication technologies such as the Internet and the like make progress, contents of digital video information, digital image information, and the like rapidly increase in various fields.

For example, to effectively and accurately search these contents, videos and images must be analyzed by a computer. However, there are many cases in which two or more objects are recorded in an overlapping state in one image captured.

When the motion of one target object is traced and analyzed, the overlapping state acts as interference. Consequently, there is required a technology for separating two objects that overlap particularly in a binary image.

This technology has been researched particularly in the field of OCR (optical character recognition). As disclosed in, for example, PCT/US96/04036, there are known a method and apparatus for restoring obscure portions of an image composed of continuous characters or other patterns when overlapping lines exist therein.

The method proposes, as a method of restoring a lost portion of a circulating pattern, for example characters, in an image composed of pixels, includes a step of determining an effective pixel value in the vicinity of the lost portion of the circulating pattern and a step of restoring the effective pixel value which is a value corresponding to pixels including the lost portion of the circulating pattern by using at least a part of data stored in a double stochastic finite state machine pretrained with the circulating pattern.

Although the method is effective in a pattern in which text and the like circulatingly appear, it is not suitable for contents such as videos that must be processed at high speed because processing executed by the method is complex, in addition to that it is difficult to use the method in an ordinary image.

That is, in a video in which a player plays a sport on the ground on which, for example, lines are drawn and further a net is disposed, it is contemplated that the player overlaps with the lines and the net in almost all the times. In this case, the conventional method cannot be used in a scene in which the motion of the player is to be analyzed. Further, since the player moves at high speed, high speed processing must be realized. There is conventionally proposed no technology that can effectively cope with the above case.

### Disclosure of the Invention

The present invention is created based on the conventional background described above, is a technology for permitting two overlapping objects included in an image to be separated and extracted at high speed, and is particularly suitable to a case in which one object is a line-shaped image. The present invention will be sequentially disclosed below.

That is, in an image processing method of eliminating a second line-shaped image object, which overlaps with a first image object in one image comprising effective or ineffective pixels, from the first image object, the method comprises the respective steps of a line segment extraction step for extracting a line segment from the second line-shaped image object by a line segment extraction means, an elimination step for eliminating the second line-shaped image object from the first image object by a line-shaped image elimination means, a pixel extraction step for scanning a vicinity region of the line segment on the first image object and sequentially extracting pixels to be scanned by an image scan means, an effective pixel determination step for determining whether or not the extracted pixels to be scanned are effective pixels by an effective pixel determination means, and a pixel interpolation step for dropping a perpendicular from the pixels to be scanned that are determined to be the effective pixels at the effective pixel determination step to a nearest line segment and setting all the pixels on the perpendicular as the effective pixels by a pixel interpolation means.

Further, the image may be one frame in a moving image comprising a plurality of frames.

Otherwise, the image may be an image obtained by subjecting a single frame or plural frames in the moving image comprising the plurality of frames to predetermined arithmetic processing. In this arrangement, the arithmetic processing may be any one of processing for determining a difference between two arbitrary frames in the moving image or processing for determining a change region in one arbitrary frame in the moving image.

Further, the processing for determining the change region in the one arbitrary frame in the moving image may be processing for extracting predetermined frames before and after the one frame and obtaining difference images between each predetermined frame and the one frame, respectively as well as executing an ANDing operation of both the difference images.

In the above arrangement, a line segment may be extracted using the Hough transform at the line segment extraction step.

Further, the present invention can also provide the following image processing apparatus for eliminating a second line-shaped image object, which overlaps with a first image object in a single image comprising effective or ineffective pixels, from the first image object.

That is, the apparatus is characterized by comprising a line segment extraction means for extracting a line segment from the second line-shaped image object, a line-shaped image elimination means for eliminating the second line-shaped image object from the first image object, an image scan means for scanning a vicinity region of the line segment on the first image object and sequentially extracting pixels to be scanned, an effective pixel determination means for determining whether or not the extracted pixels to be scanned are effective pixels, and a pixel interpolation means for dropping a perpendicular from the pixels to be scanned that are determined to be the effective pixels at the effective pixel determination step to a nearest line segment and setting all the pixels on the perpendicular as the effective pixels.

The image processing apparatus may comprise a frame extraction means for extracting a single frame or a plurality of frames from a moving image comprising a plurality of frames and a frame arithmetic processing means for subjecting an extracted frame to predetermined arithmetic processing and use a result of the arithmetic processing as the image.

Further, the image processing apparatus may comprise a frame extraction means for extracting a single frame or a plurality of frames from a moving image comprising a plurality of frames and a frame arithmetic processing means for subjecting an extracted frame to predetermined arithmetic processing and uses a result of the arithmetic processing as the image. The frame arithmetic processing means may be arranged such that it executes any processing of processing for determining a difference between two arbitrary frames in the moving image and processing for determining a change region in one arbitrary frame in the moving image.

Further, the processing for determining the change region in the one arbitrary frame in the moving image may use processing for extracting predetermined frames before and after the one frame and obtaining difference images between each predetermined frame and the one frame, respectively as well as executing an ANDing operation of both the difference images.

In the image processing apparatus described above, the line segment extraction means may extract a line segment using the Hough transform.

### Brief Description of the Drawings

Fig. 1 is a processing flowchart of an image processing method according to the present invention.
Fig. 2 is a configurational view of an image processing apparatus according to the present invention.
Fig. 3 is a view explaining an example of a second object.
Fig. 4 is a view explaining an example of a first object.
Fig. 5 is a view explaining a state in which the first object is segmentized in an elimination step.
Fig. 6 is a view explaining a court model of a tennis court.
Fig. 7 is a view explaining a net model of a tennis court.
Fig. 8 shows a binary image B_{c}(t).
Fig. 9 shows a binary image B₁(t).
Fig. 10 shows a binary image B₂(t).
Fig. 11 shows a binary image B_{diff}(t).
Fig. 12 shows a binary image B_{label}(t).
Fig. 13 shows a binary image L'_{c}(t).
Fig. 14 shows a binary image L'ₙ(t).
Fig. 15 is an enlarged view in the vicinity of a player after a line segment is deleted from B'_{diff}(t).
Fig. 16 is an enlarged view in the vicinity of the player after a line segment is deleted from B'_{label}(t).
Fig. 17 is an enlarged view in the vicinity of the player of B'_{diff}(t) after pixels are interpolated.
Fig. 18 is an enlarged view in the vicinity of the player of B'_{label}(t) after the pixels are interpolated.
Fig. 19 is a view explaining how a player region is extracted.

Reference numerals denote the following portions. 10: line segment extraction step, 11: line segment image elimination step, 12: step for scanning line segment vicinity region, 13: step for determining whether or not pixels to be scanned are effective pixels, 14: processing for dropping a perpendicular between pixels to be scanned and line segment, 15: step for converting all the points on the perpendicular into effective pixels, 30: line-shaped second object, 31: first object, 32: pixels to be scanned

### Best Mode for Carrying Out the Invention

A preferable method of embodying the present invention will be described referring to the drawings. Note that the embodiment of the present invention is not limited to the one described below and may be appropriately modified.

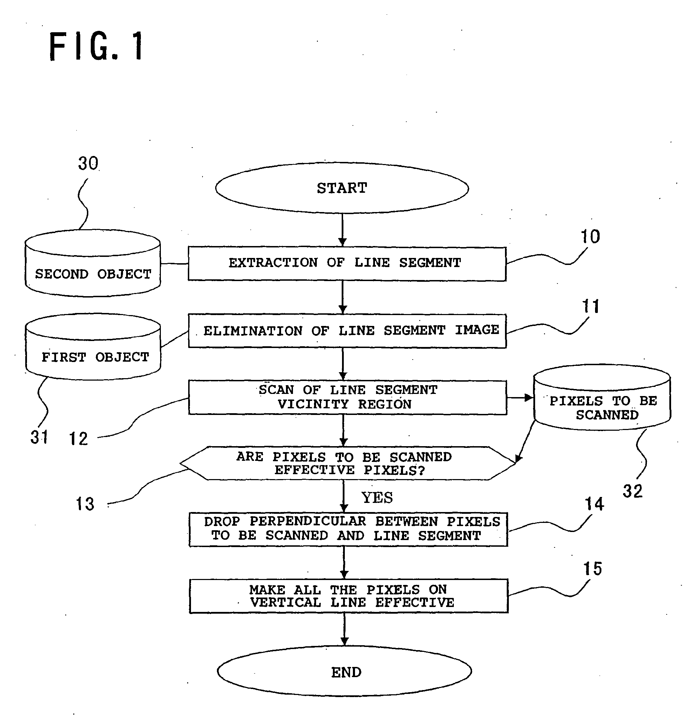

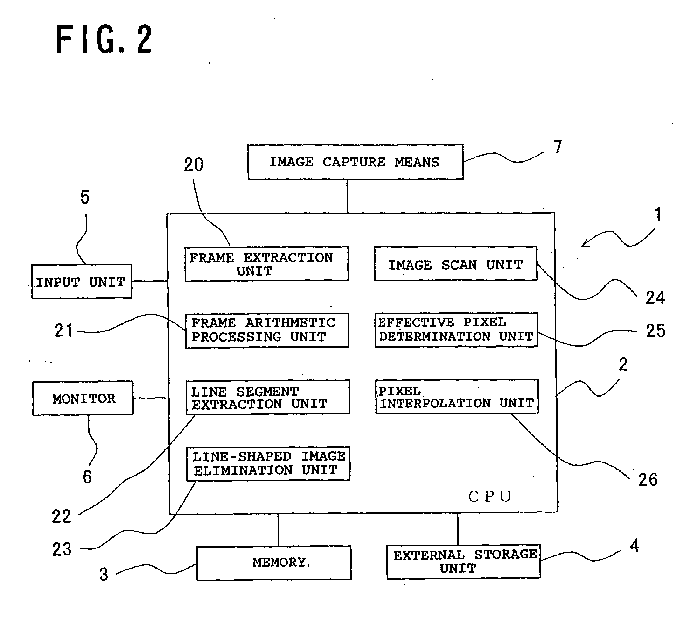

Fig. 1 shows a flowchart of an image processing method of the present invention, and Fig. 2 shows an image processing apparatus (hereinafter called the apparatus) according to the present invention, respectively.

The apparatus (1) can be composed of a known personal computer that is composed of a CPU (2) for executing arithmetic processing, a RAM/ROM memory (3), an external storage unit (4) such as a hard disc and the like, an input unit (5) such as a keyboard, a mouse, and the like, a monitor (6) for display an output.

In the apparatus (1), an image capture means (7) for inputting a video is connected to the CPU (2), in addition to the above units, so that a video signal from a not shown came and video replay device is recorded to the external storage unit (4).

When the video signal is an analog signal, an analog/digital converting function is mounted on the image capture means (7), thereby digital data is recorded to the external storage unit (4).

In a core portion of the present invention, an image captured by the image capture means (7) and recorded to the external storage unit (7) is subjected to processing as shown in Fig. 1.

First, a line segment extraction unit (22) of the CPU (2) extracts a line segment from a second object (30) in the image at a step (10). Although any optional methods may be employed to separate the region of the second object from the image, when, for example, a line-shaped image has a predetermined shape, the line segment may be extracted according to the shape.

Then, a line-shaped image elimination unit (23) enlarges the line segment obtained at the above step and removes the line segment from a portion in which at least a first object (31) is included in the image (line segment image elimination step (11)). It is needless to say that a line-shaped image may be eliminated from the entire image. The eliminated image can be stored in the memory (3).

When the line segment image is eliminated as described above, since the portion of the line segment image (second object (30)) overlapping with the first object (31) is eliminated, a band-shaped ineffective pixel portion is made on the intrinsic first object.

The present invention has the following steps to interpolate it effectively.

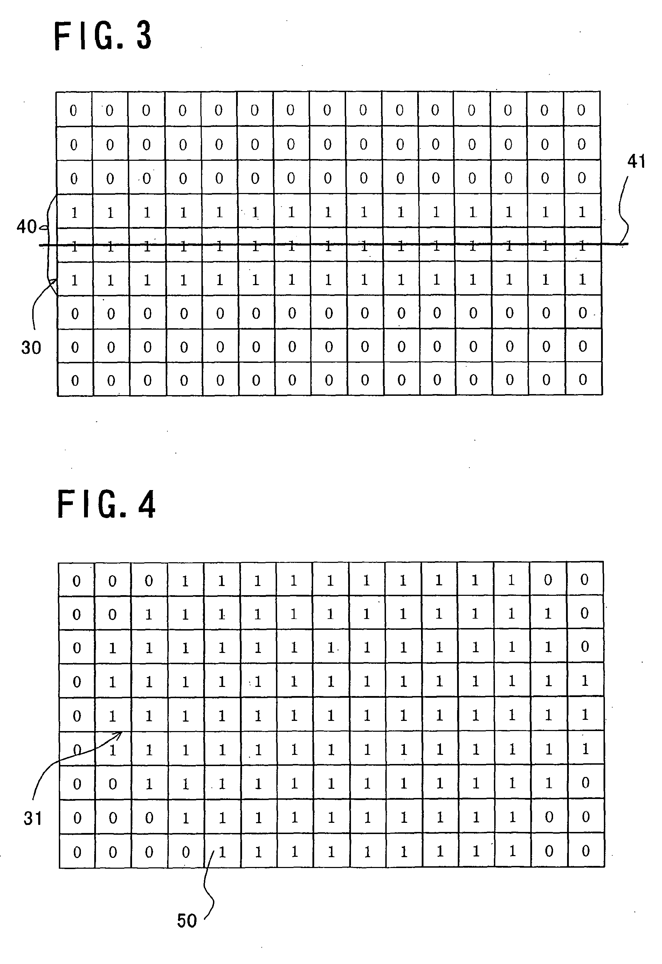

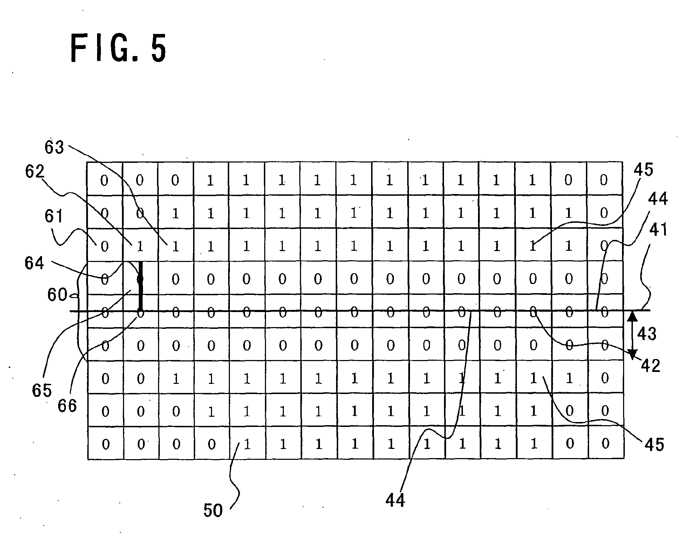

For convenience's sake, Fig. 3 shows an example of the second object (30), Fig. 4 shows an example of the first object (31), and Fig. 5 shows a state in which the first object (31) is segmentized at the elimination step (11). In the respective figures, pixels with "1" show effective pixels, and pixels with "0" show ineffective pixels.

In Fig. 3, band-shaped effective pixels (40) arranged in a horizontal direction are the second object (30) as the line-shaped image, and the other regions are ineffective pixels. Then, a line segment (41) is extracted at line segment extraction step (10).

In contrast, as shown in Fig. 4, the first object (31) is composed of a set of multiple pixels (50) ... expressed by "1".

In an actual image, the second object (30) overlaps with the first object (31), and elimination of the second object (30) results in a state shown in Fig. 5. That is, an ineffective pixel band (60) is made in the first object (31), thereby the first object (31) is segmentized.

To interpolate the segmentation, in the present invention, the pixels in the vicinity of the line segment (41) are sequentially scanned by an image scan unit (24) of the CPU (2), and the pixels within a predetermined threshold value are extracted.

At the time, when the line segment (41) is enlarged to a line width of three pixels at the line segment image elimination step (11) (in the cases shown in Figs. 3 to 5), the pixels spaced apart from the line segment by two pixels may be extracted. The to be scanned pixels (32) extracted as described above can be also temporarily stored in the memory (3).

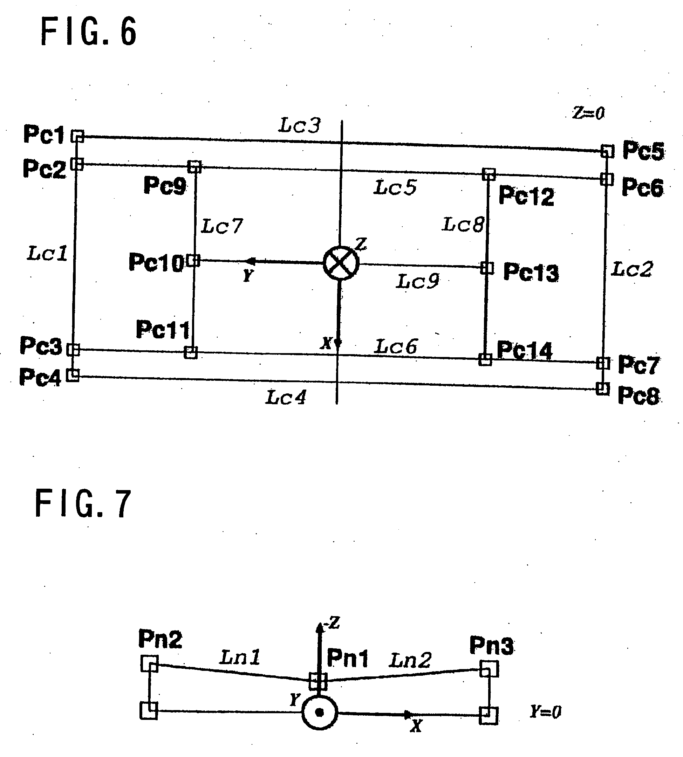

Further, as shown in Fig. 6, the pixels (42) on the line segment (41) may be sequentially scanned, screen coordinates (44), (44), (45), (45) (in this case, four types of screen coordinates exist to a single pixel (42)) may be determined by adding and subtracting a value, which is obtained by adding 1 to a size (43) one half the line width, to and from the screen coordinate of the pixel (42), which is obtained each time the pixels (42) are scanned, in the respective directions of x- and y-directions, and the pixels of the screen coordinates may be used as the pixels to be scanned (32).

Then, an effective pixel determination unit (25) determines whether or not the extracted pixels are effective pixels at determination step (13).

As a result, when the pixels are effective pixels (having information of "1"), a pixel interpolation unit (26) drops a virtual perpendicular between the pixels and the line segment (41) at step (14) and converts all the ineffective pixels on the perpendicular into effective pixels at step (15) sequentially. Processing for making the ineffective pixels effective can be executed by rewriting the information of "0" allocated to the respective pixels to "1".

To specifically show the above-mentioned, when scanning is sequentially executed in Fig. 5 from a pixel (61), which is spaced apart from the line segment (41) by the distance of two pixels, to pixels (62), (63), ... , the pixel (61) cannot be scanned because it is an ineffective pixel. Since the image pixel (62) is an effective pixel, a perpendicular (64) is calculated, and pixels (65), (66) positioned on the perpendicular (64) are made to effective pixels. As apparent from the above description, the pixels lost by eliminating the second object (30) can be interpolated by repeating the above process, thereby an image very near to the original first object (31) can be obtained.

A main portion of the present invention is as described above. Further, the following arrangement can be provided as an example to which the present invention is applied.

That is, in the above description, the flow of processing is explained using the single image. However, the present invention can be most appropriately applied in particular to a video composed of a plurality of frames in time series, and the CPU (2) can suitably extract arbitrary one frame in the above frames through a frame extraction unit (20). The thus extracted one frame may be also processed as the above image. Further, as described later, a plurality of frames may be extracted.

Further, the CPU (2) may be provided with a frame arithmetic processing unit (21) to subject a captured image to arithmetic processing according to a predetermined system. Since the arithmetic processing can be realized by a known image processing technology, an arithmetic operation method of the processing may be arbitrarily determined in the present invention.

Next, an embodiment of the present invention will be described using a player playing a game on a tennis court as an example. When a video of tennis is recorded, the player is recorded while overlapping with line-shaped images of court lines and net lines drawn on the ground, which interferes extraction of the movement of the player. Accordingly, in the present invention, the movement of the player is separated and extracted at high speed with pinpoint accuracy by the technology.

First, the court and net lines are extracted as a second object (30). At the time, a form of the tennis court is used. As shown in Fig. 6, court characteristic points P_{c1}, ... , P_{c14} and court lines L_{c1}, ... , L_{c9} are defined. Likewise, net characteristic points Pₙ₁, ... , Pₙ₃ and net lines Lₙ₁, Lₙ₂ as shown in Fig. 7 are determined, and they are referred to as a court model and a net model.

The original points of the respective models are set to the center of the court, and coordinate axes are determined as shown in the figure. The court model is defined on an XY plane, and the net model is defined on a ZX plane.

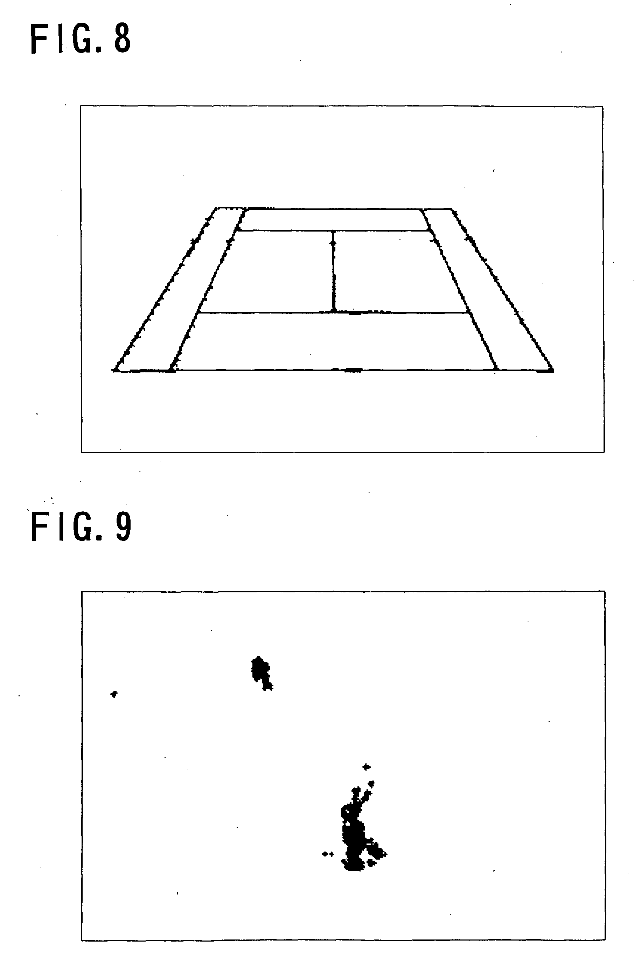

First, the court lines are extracted. The court lines L_{c1}, ... , L_{c9} in Fig. 6 are determined by detecting the court characteristic points at both the ends thereof. The process is composed of the following steps.
(i) At time t = 0, an initial characteristic point P_{c}(0) is given as an input. Next, as to a court line L_{c}(0) determined by P_{c}(0), respective lines are converted into the Hough plane. There are prepared detection windows W_{c}(0) which are centered on the respective peak points on the Hough plane and have magnitudes Wₜₕ, Wᵣₒ.
(ii) At time t = t, first, a binary image B(t) of an original image is ANDed with the vicinity region of a court line L_{c}(t - 1) to thereby create a binary image (called a court line binary image) B_{c}(t) composed only of a court vicinity. Fig. 8 shows the thus created image. The court line binary image shown in the figure and a net line binary image to be described later correspond to line-shaped image objects in an image that is referred to in the present invention.
(iii) They are subjected to the Hough transform every line, peaks are detected within the range restricted by respective detection windows W_{c}(t - 1), and characteristic points P_{c}(t) are updated.
(iv) A court line L_{c}(t) is subjected to the Hough transform again, and a detection window W_{c}(t) is also updated. The process returns to step (ii).

When the net line is extracted, an initial characteristic point Pₙ(0) at time t = 0 is given as an input, and a net line Lₙ(0) and a detection window Wₙ(0) are prepared. Further, at time t = t, B(t) - B_{c}(t), which is obtained by subtracting the court line binary image from the binary image of the original image, is ANDed with the vicinity region of a net line Lₙ(t - 1) to thereby create a net line binary image Bₙ(t). Bₙ(t) is subjected to the Hough transform, peaks are detected within a detection window range, and a characteristic point Pₙ(t) is updated.

There is known a method called the Hough transform described above (for example, US Patent No. 3069654). In addition to the Hough transform, there is hardware for the Hough transform that is shown in "Hardware for the Hough Transform Using ROM" by Kunio Onda et al ('87 General Assembly Commemorative of 70th Anniversary of Institute of Electronics, Information and Communication Engineers, No. 1587). Further, there are also methods disclosed in Japanese Patent No. 2935863 and Japanese Patent Application Laid-Open Publication No. Hei-6-274619. Note that the Hough transform is variously improved as disclosed in Japanese Patent No. 2646363 and the like, and the modified methods may be arbitrarily used.

In the present invention, the line segment extraction unit (2) of the CPU (2) executes the arithmetic processing of the Hough transform.

Further, various known methods such as a straight line approximation method using a least squares method can be used to extract a line segment, in addition to the above method. Further, the present invention can be also applied to any line-shaped (band-shaped) objects such as circular, arc, polygonal, and other objects in addition to a straight line object as long as an image is a line-shaped image.

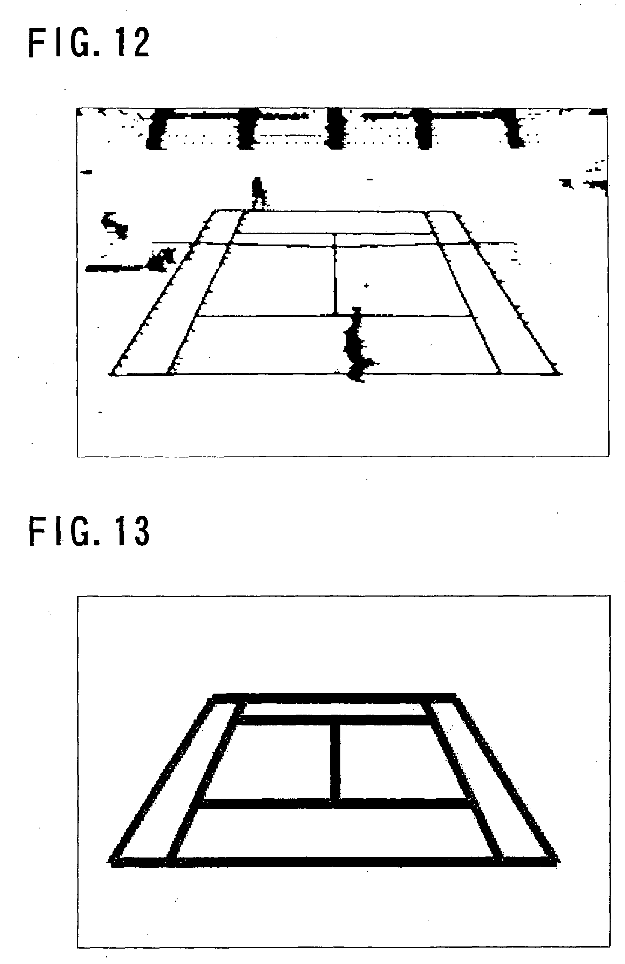

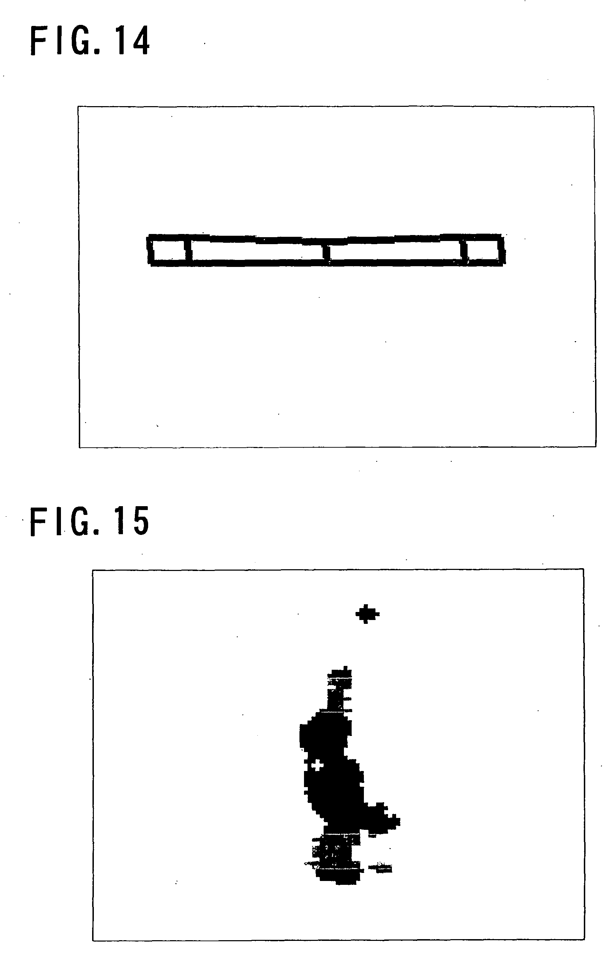

Next, the following steps are executed to extract the player (first object).
(I) The frame extraction unit (20) extracts a reference frame at time t = t and frames apart from the reference frame by a time s before and after the reference frame. Then, the differences between the front and rear frames and the reference frame, and binary images B₁(t) and B₂(t) are created using an appropriate threshold value. The frame arithmetic processing unit (21) of the CPU (2) executes an arithmetic operation for determining the differences.
   As a method of determining the threshold value, any arbitrary methods may be used which include an Ohtsu's method (method of determining a threshold value by minimizing the dispersion in an average class), Kittler's method (method of determining a threshold value by minimizing entropy with average conditions), a region dividing method (method of dividing an image into several small regions and determining a threshold value most suitable for the property of each small region), and the like, in addition to a method of using a predetermined fixed value as a threshold value.

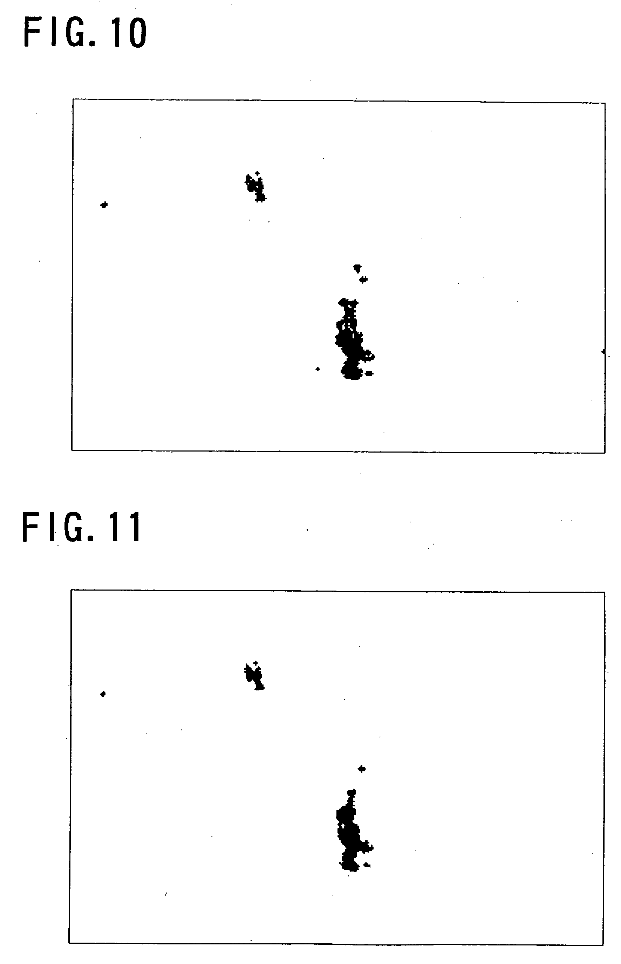

   Figs. 9 and 10 show the binary images B₁(t) and B₂(t) obtained here, respectively.
(II) Fig. 11 shows a binary image obtained by ANDing the two difference images with each other as a binary image B_{diff}(t). Change regions in one frame of an initial video (motion image) can be determined by the step. They can be subjected to arithmetic processing in the frame arithmetic processing unit (21) of the CPU (2).
   As the processing executed by the frame arithmetic processing unit (21), two arbitrary frames may be extracted by the frame extraction unit (20), and the difference between them may be determined and subjected to known processing by the frame arithmetic processing unit (21) as often used in image processing, in addition to the above processing.
(III) Color clusters corresponding to typical colors of player's uniforms and the like are previously prepared, the pixels, which are included in the color clusters, of the pixels of an image I(t) at time t = t are set as effective pixels "1", thereby a binary image B_{label}(t) is created as shown in Fig. 12. A method of extracting the pixels included in the color clusters is known, and the resultant binary image B_{label}(t) is an image obtained by subjecting a single frame in a video to arithmetic processing executed by the frame arithmetic processing unit (21).
(IV) Binary images obtained by enlarging court net lines L_{c}(t), Lₙ(t) are shown by L'_{c}(t), L'ₙ(t) (shown in Figs. 13 and 14, respectively), and B'_{diff}(t), B'_{label}(t) are obtained by deleting these regions from B_{diff}(t), B_{label}(t).

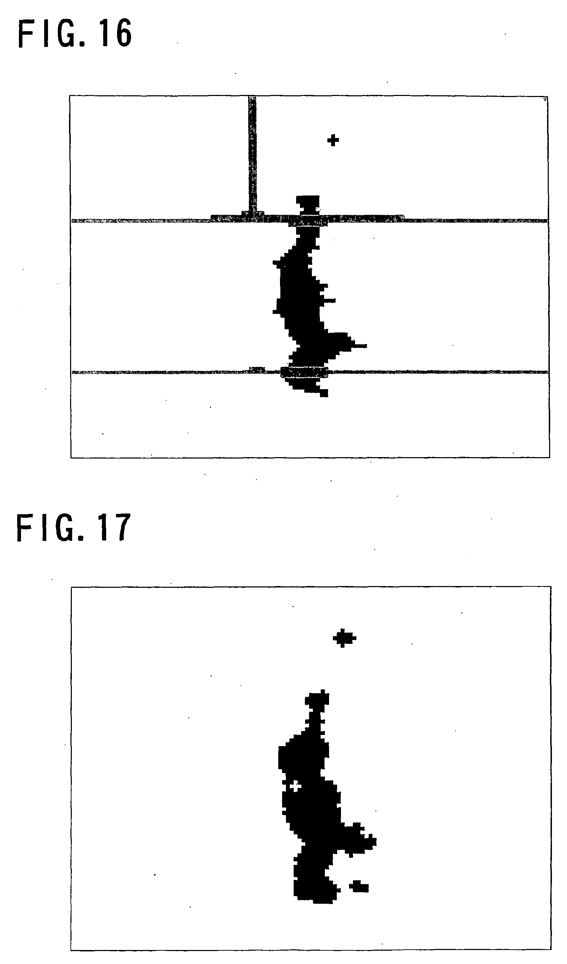

   Figs. 15 and 16 show enlarged views in the vicinity of the player after they are deleted. As described above, in the present invention, as to a region from which a portion overlapping with a player region is deleted by the delete processing, the vicinity regions of L'_{c}(t), L'ₙ(t) are scanned on B'_{diff}(t), B'_{label}(t). When the pixels lp to be scanned on B'_{diff}(t), B'_{label}(t) are effective pixels, the pixel group lₚᵥ existing up to the foot of a perpendicular dropped from lₚ to L_{c}(t) or Lₙ(t) are made to effective pixels.

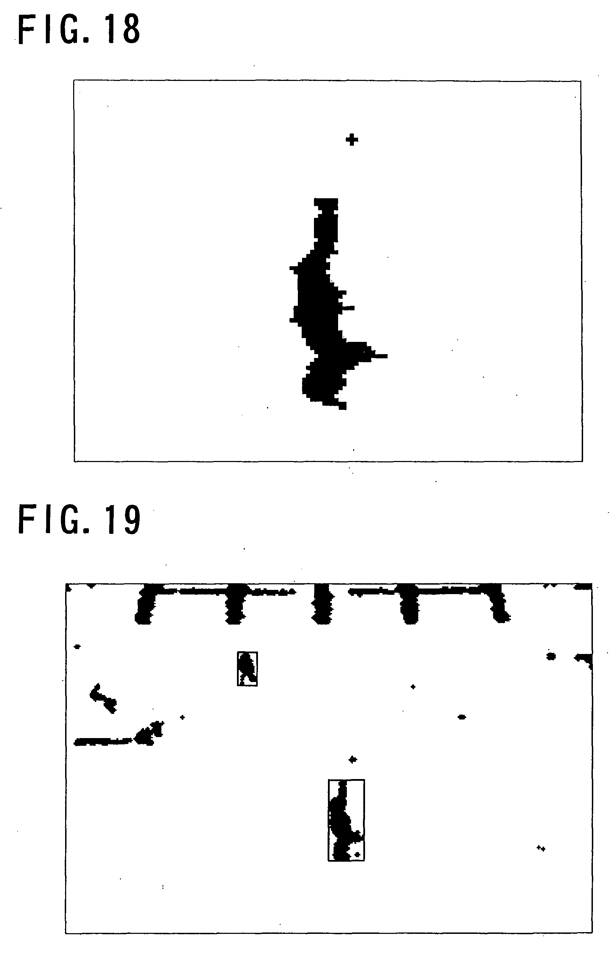

   Figs. 17 and 18 show enlarged views of the vicinity of the player of B'_{diff}(t), B'_{label}(t) obtained by the processing, respectively.
(V) Finally, the two images are ORed with each other and made to binary image B_{cand}(t). A reason why the OR operation is executed in place of the AND operation is to extract the regions of the hands and foots of the player as stably as possible even if they move. When the player's region is extracted only by the simple color labeling, it may be difficult to stably extract the player's region at the time dissolution is insufficient or the color of the player uniform is not almost different from a background color. Further, when only time subtraction images are used, a search is often missed when the player moves slowly. The OR operation is executed here to stably extract the player region in more detail while interpolating the component of a motion by the time subtraction images.

As a result of the above steps, the player is extracted as shown in Fig. 19 by setting a region having a predetermined area or more in the binary image B_{cand}(t) as a player initial position.

It should be noted that noise processing is executed in Fig. 19, and, in the embodiment of the present invention, the image processing can be executed by appropriately using the CPU (2).

As described above in detail, according to the present invention, there can be provided the image processing technology for eliminating a second line-shaped image object, which overlaps with a first image object in one image comprising effective or ineffective pixels, from the first image object. Since the arithmetic processing executed in the above method is simple, the method is very effective when there are many frames as in a video and each one frame must be processed at high speed.

## Claims

1. An image processing method of eliminating a second line-shaped image object, which overlaps with a first image object in one image comprising effective or ineffective pixels, from the first image object, the method comprising the respective steps of:
a line segment extraction step for extracting a line segment from the second line-shaped image object by a line segment extraction means;
an elimination step for eliminating the second line-shaped image object from the first image object by a line-shaped image elimination means;
a pixel extraction step for scanning a vicinity region of the line segment on the first image object and sequentially extracting pixels to be scanned by an image scan means;
an effective pixel determination step for determining whether or not the extracted pixels to be scanned are effective pixels by an effective pixel determination means; and
a pixel interpolation step for dropping a perpendicular from the pixels to be scanned that are determined to be the effective pixels at the effective pixel determination step to a nearest line segment and setting all the pixels on the perpendicular as the effective pixels by a pixel interpolation means.

2. An image processing method according to claim 1, wherein the image is one frame in a moving image comprising a plurality of frames.

3. An image processing method according to claim 1, wherein the image is an image obtained by subjecting a single frame or plural frames in the moving image comprising the plurality of frames to predetermined arithmetic processing.

4. An image processing method according to claim 3, wherein the arithmetic processing is any one of processing for determining a difference between two arbitrary frames in the moving image or processing for determining a change region in one arbitrary frame in the moving image.

5. An image processing method according to claim 4, wherein the processing for determining the change region in the one arbitrary frame in the moving image is processing for extracting predetermined frames before and after the one frame and obtaining difference images between each predetermined frame and the one frame, respectively as well as executing an ANDing operation of both the difference images.

6. An image processing method according to claims 1 to 5, wherein a line segment is extracted using the Hough transform at the line segment extraction step.

7. An image processing apparatus for eliminating a second line-shaped image object, which overlaps with a first image object in a single image comprising effective or ineffective pixels, from the first image object, the apparatus comprising:
a line segment extraction means for extracting a line segment from the second line-shaped image object;
a line-shaped image elimination means for eliminating the second line-shaped image object from the first image object;
an image scan means for scanning a vicinity region of the line segment on the first image object and sequentially extracting pixels to be scanned;
an effective pixel determination means for determining whether or not the extracted pixels to be scanned are effective pixels; and
a pixel interpolation means for dropping a perpendicular from the pixels to be scanned that are determined to be the effective pixels at the effective pixel determination step to a nearest line segment and setting all the pixels on the perpendicular as the effective pixels.

8. An image processing apparatus according to claim 7 comprises a frame extraction means for extracting one frame from a moving image comprising a plurality of frame and uses one frame extracted by the frame extraction means as an image.

9. An image processing apparatus according to claim 7 comprises a frame extraction means for extracting a single frame or a plurality of frames from a moving image comprising a plurality of frames and a frame arithmetic processing means for subjecting an extracted frame to predetermined arithmetic processing and uses a result of the arithmetic processing as the image.

10. A image processing apparatus according to claim 9, wherein the frame arithmetic processing means executes any processing of processing for determining a difference between two arbitrary frames in the moving image and processing for determining a change region in one arbitrary frame in the moving image.

11. An image processing apparatus according to claim 10, wherein, the processing executed by the frame arithmetic processing means to determine the change region in the one arbitrary frame is processing for extracting predetermined frames before and after the one frame and obtaining difference images between each predetermined frame and the one frame, respectively as well as executing an ANDing operation of both the difference images.

12. An image processing apparatus according to claims 7 to 11, wherein the line segment extraction means extracts a line segment using the Hough transform.
